# EUROPEAN PATENT SPECIFICATION

(11) **EP 3 070 981 B1**
(45) Date of publication and mention of the grant of the patent: **04.04.2018**
(21) Application number: 13898538.7
(22) Date of filing: 05.12.2013
(51) Int. Cl.: H04W 52/02

(54) **ENERGY SAVING METHOD AND DEVICE FOR HETEROGENEOUS NETWORK**
ENERGIESPARVERFAHREN UND VORRICHTUNG FÜR HETEROGENES NETZWERK
PROCÉDÉ ET DISPOSITIF D'ÉCONOMIE D'ÉNERGIE POUR RÉSEAU HÉTÉROGÈNE

(43) Date of publication of application: 21.09.2016
(73) Proprietor: Huawei Technologies Co., Ltd., Longgang District Shenzhen, Guangdong 518129 (CN)
(72) Inventor: WU, Jianming, Shenzhen Guangdong 518129 (CN)
(74) Representative: Thun, Clemens
(86) International application number: PCT/CN2013/088648
(87) International publication number: WO 2015/081533

(56) References cited:
- CN-A- 101 621 811
- CN-A- 102 186 209
- US-A1- 2010 002 653
- US-A1- 2013 294 272

## Description

### TECHNICAL FIELD

Embodiments of the present invention relate to communications technologies, and in particular, to a heterogeneous network energy saving method and a device.

### BACKGROUND

A heterogeneous network (Heterogeneous Network, HetNet for short) is a future-oriented innovative mobile broadband network architecture, is formed by cells of different sizes and types, and may include a macro cell (macro cell), a micro cell (micro cell), a pico cell (pico cell), and a femto cell (femto cell). Different types of cells are corresponding to different types of base station devices. Abase station that is corresponding to a micro cell, a pico cell, or a femto cell is generally referred to as a small-cell base station. Small-cell base stations are generally considered as low-power wireless access points that are mainly classified into different types according to power, and are access points with a license (license) and managed by an operator. A small-cell base station can provide a cell coverage enhancement function such as filling a coverage hole, or a capacity enhancement function such as offloading.

In the HetNet, key components in these 2G/3G/4G wireless infrastructures are deployed in a coordinated manner, so that these network components can cooperatively work to provide a high data throughput rate, a strong mobility capability, and premium user experience, and a requirement of a mobile broadband user for 2G/3G/4G network performance is fully satisfied.

An obvious feature of HetNet networking is that for a service hotspot area, a same area may be repeatedly covered by network devices of different communications standards and different station types. Repeated network coverage may be used to provide a better network service, but a resource is wasted to some degree. There is an urgent need to put forward a networking energy saving method, so as to avoid a resource waste without affecting user experience.

The document US 2013 / 294272 A1 shows a heterogeneous network energy saving method. Based upon load information of participating cells of a network, it is determined which cells can be deactivated in order to save energy.

### SUMMARY

Embodiments of the present invention provide a heterogeneous network energy saving method and a device, so as to avoid a resource waste.

According to a first aspect, an embodiment of the present invention provides a heterogeneous network energy saving method, including:
acquiring, by a network control device, load information of all cells of a first access network device; and
determining, by the network control device, a to-be-closed cell according to the load information of all the cells, determining at least one second access network device according to the to-be-closed cell, migrating a service in the to-be-closed cell to the at least one second access network device, and closing the to-be-closed cell,
where the to-be-closed cell is within a network coverage area formed by the at least one second access network device.
the acquiring, by a network control device, load information of all cells of a first access network device includes:
sending, by the network control device, a second load information acquiring request to the first access network device, and receiving the load information of all the cells that is returned by the first access network device,
after the closing, by the network control device, the to-be-closed cell, the method further includes:
receiving, by the network control device, a first wake-up request
   that is sent by one second access network device of the at least one second access network device; and
selecting, by the network control device, a to-be-waked-up cell from closed cells of the first access network device by determining a closed cell that has a same coverage area as the cell of the second access network device and that is of the first access network device as the to-be-waked-up cell and sending a second wake-up request to the first access network device, where the second wake-up request carries an identifier that is used to indicate the to-be-waked-up cell, so that the first access network device enables a radio frequency module corresponding to the to-be-waked-up cell.

In a first possible implementation manner, the determining, by the network control device, a to-be-closed cell according to the load information of all the cells includes:
determining, by the network control device, a cell whose load information does not exceed a first preset threshold as the to-be-closed cell.

With reference to the first aspect or the first possible implementation manner of the first aspect, in a second possible implementation manner, the determining, by the network control device, at least one second access network device according to the to-be-closed cell, and migrating a service in the to-be-closed cell to the at least one second access network device includes:
determining, by the network control device, the at least one second access network device according to the to-be-closed cell;
separately sending, by the network control device, a first load information acquiring request to the at least one second access network device, and receiving load information separately returned by the at least one second access network device; and
determining, by the network control device according to the load information of the to-be-closed cell and load information of the at least one second access network device, whether the at least one second access network device can bear a load of the to-be-closed cell, and if the at least one second access network device can bear the load of the to-be-closed cell, migrating the service in the to-be-closed cell to the at least one second access network device.

With reference to the third possible implementation manner of the first aspect, in a fourth possible implementation manner, the migrating, by the network control device, a service in the to-be-closed cell to the at least one second access network device, and closing the to-be-closed cell includes:
sending, by the network control device, a first handover command to the first access network device, where the first handover command carries an identifier that is used to indicate the to-be-closed cell, so that the first access network device hands over and connects user equipment UE served by the to-be-closed cell to the at least one second access network device; and closing the to-be-closed cell.

With reference to the third possible implementation manner of the first aspect, in a fifth possible implementation manner, after the migrating, by the network control device, a service in the to-be-closed cell to the at least one second access network device, and closing the to-be-closed cell, the method further includes:
receiving, by the network control device, a cell hibernation notification message sent by the first access network device, and sending the cell hibernation notification message to the at least one second access network device, where the cell hibernation notification message carries an identifier that is used to indicate a closed cell.

With reference to the first aspect or the first or the second possible implementation manner of the first aspect, in a seventh possible implementation manner, the network control device is the first access network device, and
the acquiring, by a network control device, load information of all cells of
a first access network device includes:
acquiring, by the first access network device by means of measurement, the load information of all the cells.

With reference to the seventh possible implementation manner of the first aspect, in an eighth possible implementation manner, the migrating, by the network control device, a service in the to-be-closed cell to the at least one second access network device, and closing the to-be-closed cell includes:
handing over and connecting, by the first access network device, UE served by the to-be-closed cell to the at least one second access network device, and closing the to-be-closed cell.

With reference to the eighth possible implementation manner of the first aspect, in a ninth possible implementation manner, the handing over and connecting, by the first access network device, UE served by the to-be-closed cell to the at least one second access network device includes:
sending, by the first access network device, a second handover command to the UE served by the to-be-closed cell, so that the UE hands over and connects, according to the second handover command, to one second access network device of the at least one second access network device; or
gradually decreasing, by the first access network device, a transmit power
of a radio frequency module corresponding to the to-be-closed cell, so that when detecting that signal quality of the to-be-closed cell is lower than a preset value, the UE connects to one second access network device of the at least one second access network device.

With reference to the seventh possible implementation manner of the first aspect, in a tenth possible implementation manner, after the migrating, by the network control device, a service in the to-be-closed cell to the at least one second access network device, and closing the to-be-closed cell, the method further includes:
sending, by the first access network device, a cell hibernation notification message to the at least one second access network device, where the cell hibernation notification message carries an identifier that is used to indicate a closed cell.

With reference to the seventh possible implementation manner of the first aspect, in an eleventh possible implementation manner, after the closing, by the network control device, the to-be-closed cell, the method further includes:
receiving, by the first access network device, a wake-up request that is sent by one second access network device of the at least one second access network device, where the wake-up request carries an identifier that is used to indicate a to-be-waked-up cell; and
enabling, by the first access network device, a radio frequency module corresponding to the to-be-waked-up cell.

With reference to the eleventh possible implementation manner of the first aspect, in a twelfth possible implementation manner, the enabling, by the first access network device, a radio frequency module corresponding to the to-be-waked-up cell includes:
enabling, by the first access network device by using a maximum transmit power, the radio frequency module corresponding to the to-be-waked-up cell; or
gradually increasing, by the first access network device, a transmit power of the radio frequency module corresponding to the to-be-waked-up cell.

According to a second aspect, an embodiment of the present invention provides a network control device, including:
an acquiring unit, configured to acquire load information of all cells of a first access network device; and
a processing unit, configured to: determine a to-be-closed cell according to the load information of all the cells that is acquired by the acquiring unit, determine at least one second access network device according to the to-be-closed cell, migrate a service in the to-be-closed cell to the at least one second access network device, and
close the to-be-closed cell, where the to-be-closed cell is within a network coverage area formed by the at least one second access network device. The acquiring unit is configured to send a second load information acquiring request to the first access network device, and receiving the load information of all the cells that is returned by the first access network device. After the closing, by the network control device, the network control
device is configured to receive a first wake-up request that is sent by one second access network device of the at least one second access network device; and to select a to-be-waked-up cell from closed cells of the first access network device by determining a closed cell that has a same coverage area as the cell of the second access network device and that is of the first access network device as the to-be-waked-up cell and sending a second wake-up request to the first access network device, wherein the second wake-up request carries an identifier that is used to indicate the to-be-waked-up cell, so that the first access network device enables a radio frequency module corresponding to the to-be-waked-up cell.

In a first possible implementation manner, the processing unit is further configured to determine a cell whose load information does not exceed a first preset threshold as the to-be-closed cell.

With reference to the second aspect or the first possible implementation manner of the second aspect, in a second possible implementation manner, the processing unit is further configured to: determine the at least one second access network device according to the to-be-closed cell; separately send a first load information acquiring request to the at least one second access network device, and receive load information separately returned by the at least one second access network device; and determine, according to the load information of the to-be-closed cell and load information of the at least one second access network device, whether the at least one second access network device can bear a load of the to-be-closed cell, and if the at least one second access network device can bear the load of the to-be-closed cell, migrate the service in the to-be-closed cell to the at least one second access network device.

With reference to the second aspect or the first or the second possible implementation manner of the second aspect, in a third possible implementation manner, the acquiring unit is further configured to: send a second load information acquiring request to the first access network device, and receive load information of all the cells that is returned by the first access network device.

With reference to the third possible implementation manner of the second aspect, in a fourth possible implementation manner, the processing unit is further configured to: send a first handover command to the first access network device, where the first handover command carries an identifier that is used to indicate the to-be-closed cell, so that the first access network device hands over and connects user equipment UE served by the to-be-closed cell to the at least one second access network device; and close the to-be-closed cell.

With reference to the third possible implementation manner of the second aspect, in a fifth possible implementation manner, the processing unit is further configured to: receive a cell hibernation notification message sent by the first access network device, and send the cell hibernation notification message to the at least one second access network device, where the cell hibernation notification message carries an identifier that is used to indicate a closed cell.

With reference to the third possible implementation manner of the second aspect, in a sixth possible implementation manner, the processing unit is further configured to: receive a first wake-up request that is sent by one second access
network device of the at least one second access network device; and select a to-be-waked-up cell from a closed cell of the first access network device and send a second wake-up request to the first access network device, where the second wake-up request carries an identifier that is used to indicate the to-be-waked-up cell, so that the
first access network device enables a radio frequency module corresponding to the to-be-waked-up cell.

It can be learned from the foregoing technical solutions that according to the heterogeneous network energy saving method and the device that are provided in the embodiments of the present invention, load information of all cells of a first access network device is acquired by a network control device, a to-be-closed cell is determined according to the load information of all the cells, at least one second access network device is determined according to the to-be-closed cell, a service in the to-be-closed cell is migrated to the at least one second access network device, and the to-be-closed cell is closed, where the to-be-closed cell is within a network coverage area formed by the at least one second access network device. A load of a cell of the first access network device that provides a network resource of a capacity enhancement type is monitored; when the cell bears a small service load amount, a service of the cell is migrated to the second access network device that is used to provide a network resource of a coverage type, and the cell is closed, which implements energy saving on a heterogeneous network and avoids a resource waste.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a first heterogeneous network energy saving method according to an embodiment of the present invention;
FIG. 2 is a flowchart of a second heterogeneous network energy saving method according to an embodiment of the present invention;
FIG. 3 is a flowchart of a third heterogeneous network energy saving method according to an embodiment of the present invention;
FIG. 4 is a schematic diagram of a structure of a first network control device according to an embodiment of the present invention; and
FIG. 5 is a schematic diagram of a structure of a second network control device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

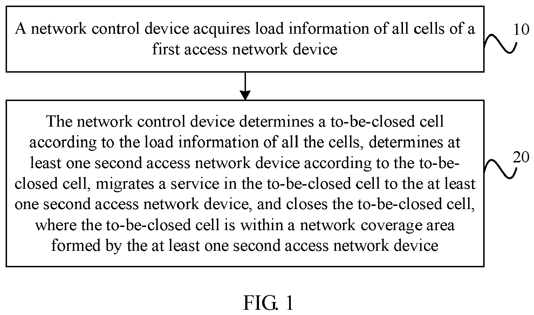

FIG. 1 is a flowchart of a first heterogeneous network energy saving method according to an embodiment of the present invention. As shown in FIG. 1, the heterogeneous network energy saving method provided in this embodiment may be specifically applied to an energy saving process of a heterogeneous network HetNet. This heterogeneous network includes one or more first access network devices and one or more second access network devices. The first access network device may be configured to provide a network resource of a capacity enhancement type, such as a small-cell base station. The second access network device may be configured to provide a network resource of a capacity coverage type, such as a macro base station. A network coverage area of one first access network device may be within a network coverage area of one second access network device, or partially overlap with network coverage areas of multiple second access network devices.

The heterogeneous network energy saving method provided in this embodiment specifically includes:
Step 10. A network control device acquires load information of all cells of the first access network device.

Specifically, the network control device may be disposed in a network, and perform real-time or periodical communication with a first access network device and a second access network device that are in the network, so as to monitor load conditions of the first access network device and the second access network device. The first access network device may be a single-carrier or multi-carrier network device. A coverage area of each antenna may be divided into one or more cells, and each cell has a unique cell identifier. When the first access network device is a multi-carrier network device, cells corresponding to different frequencies may overlap in geographic location.

The network control device may request the first access network device to acquire load information of each cell of the first access network device, and the first access network device may also send the foregoing load information to the network control device according to a preset period. The load information may specifically include information such as a quantity of users in a connected state and a PRB (physical resource block, physical resource block) usage rate, and is used to reflect a load condition of the cell in real time or within a period of time. For the purpose of avoiding frequent operation, preferably, the load information acquired by the network control device is used to reflect the load condition of the cell within a period of time.
Step 20. The network control device determines a to-be-closed cell according to the load information of all the cells, determines at least one second access network device according to the to-be-closed cell, migrates a service in the to-be-closed cell to the at least one second access network device, and closes the to-be-closed cell, where the to-be-closed cell is within a network coverage area formed by the at least one second access network device.

If a load amount of a cell is relatively small, the cell may be closed to avoid a resource waste. Before the cell is closed, a service carried by the cell needs to be migrated to the second access network device, so as to avoid service interruption. Specifically, the network control device may determine a to-be-closed cell according to a preset cell closing rule. For example, the cell closing rule may be but is not limited to: If load information of a cell does not exceed a preset threshold, the cell is determined as a to-be-closed cell; if load information of a cell is within a preset range, the cell is determined as a to-be-closed cell. The network control device then determines at least one second access network device according to the to-be-closed cell. A network coverage area formed by the at least one second access network device should include a geographic area corresponding to the to-be-closed cell, so as to achieve a purpose of migrating a service in the to-be-closed cell to the at least one second access network device. After the service migration is completed, the to-be-closed cell may be closed. The cell may be closed in multiple manners, for example, closing or hibernating modules such as a radio frequency module, a baseband module, and a main control module that are corresponding to the cell.

According to the heterogeneous network energy saving method provided in this embodiment, load information of all cells of a first access network device is acquired by a network control device, a to-be-closed cell is determined according to the load information of all the cells, at least one second access network device is determined according to the to-be-closed cell, a service in the to-be-closed cell is migrated to the at least one second access network device, and the to-be-closed cell is closed, where the to-be-closed cell is within a network coverage area formed by the at least one second access network device. A load of a cell of the first access network device that provides a network resource of a capacity enhancement type is monitored; when the cell bears a small service load amount, a service of the cell is migrated to the second access network device that is used to provide a network resource of a coverage type, and the cell is closed, which implements energy saving processing on a heterogeneous network and avoids a resource waste.

In this embodiment, that the network control device determines a to-be-closed cell according to the load information of all the cells, as described in step 20, may include:
determining, by the network control device, a cell whose load information does not exceed a first preset threshold as the to-be-closed cell.

Specifically, if load information of a cell does not exceed a first preset threshold, it indicates that a load amount of the cell is relatively small, and service migration may be performed on the cell and the cell may be closed. In an actual processing process, whether a service type of a service carried in the cell supports handover may be further determined. If the service type of the service carried in the cell supports handover, the foregoing processing is performed; if the service type of the service carried in the cell does not support handover, no processing is performed.

In this embodiment, that the network control device determines at least one second access network device according to the to-be-closed cell, and migrates a service in the to-be-closed cell to the at least one second access network device, as described in step 20, may include the following steps:
determining, by the network control device, the at least one second access network device according to the to-be-closed cell;
separately sending, by the network control device, a first load information acquiring request to the at least one second access network device, and receiving load information separately returned by the at least one second access network device; and
determining, by the network control device according to the load information of the to-be-closed cell and load information of the at least one second access network device, whether the at least one second access network device can bear a load of the to-be-closed cell, and if the at least one second access network device can bear the load of the to-be-closed cell, migrating the service in the to-be-closed cell to the at least one second access network device.

Specifically, the network control device may determine, according to network topology information, at least one second access network device that can cover the to-be-closed cell; the network control device separately sends a first load acquiring request to the at least one second access network device, so as to acquire load information of each second access network device. In an actual application process, the network control device may determine a cell that has a same coverage area as the to-be-closed cell and that is of the second access network device; therefore, the network control device may directly acquire load information of the cell of the second access network device. If the cell that has the same coverage area as the to-be-closed cell and that is of the second access network device can bear a load of the to-be-closed cell, a service of the to-be-closed cell is migrated to the cell that has the same coverage area as the to-be-closed cell and that is of the second access network device. If the cell that has the same coverage area as the to-be-closed cell and that is of the second access network device cannot bear the load of the to-be-closed cell, service migration processing is not performed. Performing service migration processing according to the load information of the second access network device may avoid a case in which the second access network device cannot successfully bear the migrated service when the second access network device is heavily loaded, which improves reliability of the service migration.

In an actual application process, a process of determining whether the cell that has the same coverage area as the to-be-closed cell and that is of the second access network device can bear a load of the to-be-closed cell may be described in the following. and for ease of description, the cell that has the same coverage area as the to-be-closed cell and that is of the second access network device is referred to as a macro cell. It is assumed that a load amount of the macro cell itself is Lused_macro, a load amount of the to-be-closed cell is Lused_micro, and the load amount of the to-be-closed cell that is converted into a load amount of the macro cell is L'used_micro. If Lused_macro+L'used_micro+Margin is not greater than a preset threshold, it is considered that a load margin of the macro cell can be used to completely support a load of the to-be-closed cell. Load conversion may be implemented by using the following formula: L'used_micro=Lused_micro×α, where α is a load conversion factor. If the second access network device is a multi-carrier network device, that whether a sector that has the same coverage area as the to-be-closed cell can bear the load of the to-be-closed cell may be determined. A load of the sector may be obtained by adding loads of cells corresponding to all carriers of the sector. Similarly, a load margin of the sector is equal to a sum of load margins of the cells corresponding to all the carriers.

In this embodiment, that the network control device acquires load information of all cells of a first access network device, as described in step 10, may include:
sending, by the network control device, a second load information acquiring request to the first access network device, and receiving the load information of all the cells that is returned by the first access network device.

Specifically, the network control device may send the second load information acquiring request to the first access network device in real time or within a preset period of time, so as to acquire the load information of all the cells of the first access network device. The preset period of time may be expressed in minutes, hours, or the like, or the like. If a geographic location in which the first access network device is deployed is an office building, and the first access network device mainly provides a network access service to a user in this office building, working time of the network control device may be further preset. For example, the network control device may be set to work within a period of time from evening to early morning of a next day or in a holiday. During the working time, the network control device acquires the load information of all the cells of the first access network device in real time or within the preset period of time. A working manner of the network control device may also be set according to an actual network energy saving requirement, which is not limited to this embodiment.

In this embodiment, that the network control device migrates a service in the to-be-closed cell to the at least one second access network device, and closes the to-be-closed cell, as described in step 20, includes:
sending, by the network control device, a first handover command to the first access network device, where the first handover command carries an identifier that is used to indicate the to-be-closed cell, so that the first access network device hands over and connects user equipment UE served by the to-be-closed cell to the at least one second access network device; and closing the to-be-closed cell.

Specifically, the network control device sends the first handover command that carries the identifier of the to-be-closed cell, to the first access network device to instruct the first access network device to perform corresponding processing. When receiving the first handover command, the first access network device sets the cell indicated by the identifier in the first handover command to be in a pre-closed state, that is, a handover request from any other base station is rejected. The first access network device hands over the UE served by the closed cell to the at least one second access network device. In an actual implementation process, closing the to-be-closed cell may be specifically closing a radio frequency module corresponding to the cell, or setting the state of the cell to hibernation.

In the foregoing handover process, the first access network device may send a handover instruction to the UE, so that the UE performs access network device handover according to the handover instruction. The first access network device may also gradually decrease a transmit power of the radio frequency module corresponding to the to-be-closed cell, and when signal quality detected by the UE is lower than a preset value, the UE hands over, by itself, to a cell that has a same coverage area as the first access network device and that is of a second access network device.

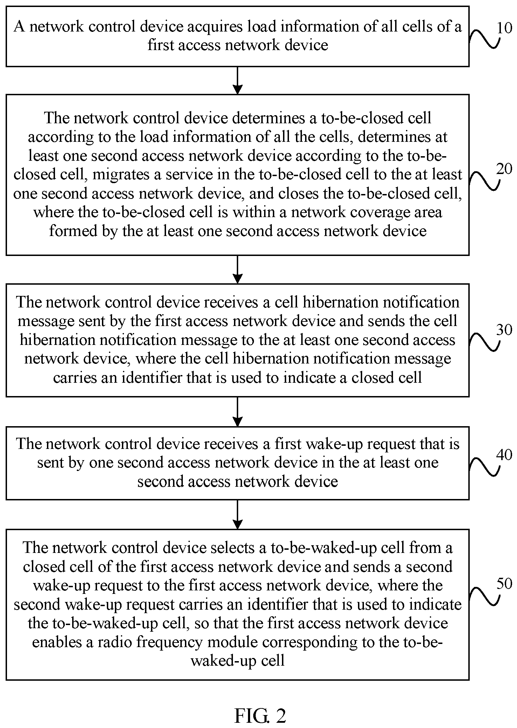

FIG. 2 is a flowchart of a second heterogeneous network energy saving method according to an embodiment of the present invention. As shown in FIG. 2, in this embodiment, after the network control device migrates a service in the to-be-closed cell to the at least one second access network device, and closes the to-be-closed cell, as described in step 20, the method further includes:
Step 30. The network control device receives a cell hibernation notification message sent by the first access network device and sends the cell hibernation notification message to the at least one second access network device, where the cell hibernation notification message carries an identifier that is used to indicate a closed cell.

Specifically, after closing the to-be-closed cell, the first access network device sends the cell hibernation notification message to the network control device, where the cell hibernation notification message carries an identifier of the closed cell. The network control device then sends the cell hibernation notification message to the at least one second access network device, so that the second access network device learns whether a cell of the first access network device that has the same coverage area as the second access network device is closed.

In this embodiment, after the network control device closes the to-be-closed cell, as described in step 20, the method further includes:
Step 40. The network control device receives a first wake-up request that is sent by one second access network device of the at least one second access network device.
Step 50. The network control device selects a to-be-waked-up cell from a closed cell of the first access network device and sends a second wake-up request to the first access network device, where the second wake-up request carries an identifier that is used to indicate the to-be-waked-up cell, so that the first access network device enables a radio frequency module corresponding to the to-be-waked-up cell.

Specifically, the second access network device may further detect load condition of the second access network device. When a load amount is relatively large and the load amount of the second access network device needs to be offloaded by the first access network device, the second access network device may further send the first wake-up request to the network control device, so as to wake up the closed cell. When receiving the first wake-up request, the network control device selects a to-be-waked-up cell from the closed cell of the first access network device, where a geographic area corresponding to the to-be-waked-up cell should be within a network coverage area of the second access network device. The first wake-up request may further carry an identifier of a cell to indicate that a load amount of the cell of the second access network device is relatively large and offloading needs to be performed, so that the network control device determines a closed cell that has a same coverage area as the cell of the second access network device and that is of the first access network device as the to-be-waked-up cell. The network control device sends a second wake-up request to the first access network device, where the second wake-up request carries an identifier of the to-be-waked-up cell. Correspondingly, after receiving the second wake-up request, the first access network device enables a radio frequency module corresponding to the to-be-waked-up cell, that is, the cell is waked up. The first access network device may gradually increase a transmit power of the radio frequency module to gradually increase a coverage radius of the cell, and may also directly enable the cell by using a maximum transmit power. The UE may hand over, by itself, to the cell of the first access network device according to detected signal quality, so as to implement offloading for the second access network device. The first access network device may further notify, by using the network control device, the second access network device of cells that are waked up. The second access network device may send a handover instruction to UE served by the second access network device, so as to hand over the UE to the first access network device.

In this embodiment, the network control device is the first access network device; and correspondingly, that the network control device acquires load information of all cells of a first access network device, as described in step 10, may include:
acquiring, by the first access network device by means of measurement, the load information of all the cells.

Specifically, the network control device may also be implemented by using the first access network device, and in this application scenario, the first access network device may measure load condition of all cells of the first access network device, so as to obtain load information.

In this embodiment, that the network control device migrates a service in the to-be-closed cell to the at least one second access network device, and closes the to-be-closed cell, as described in step 20, may include:
handing over and connecting, by the first access network device, UE served by the to-be-closed cell to the at least one second access network device; and closing the to-be-closed cell.

In this embodiment, the handing over and connecting, by the first access network device, UE served by the to-be-closed cell to the at least one second access network device may include:
sending, by the first access network device, a second handover command to the UE served by the to-be-closed cell, so that the UE hands over and connects, according to the second handover command, to one second access network device of the at least one second access network device; or
gradually decreasing, by the first access network device, a transmit power of a radio frequency module corresponding to the to-be-closed cell, so that when detecting that signal quality of the to-be-closed cell is lower than a preset value, the UE connects to one second access network device of the at least one second access network device.

Specifically, when the first access network device is used as a network control device, the first access network device may determine, by itself, the to-be-closed cell according to the load condition of the detected cell, and hand over and connect the UE to the second access network device in a manner of sending a handover command to the UE or gradually decreasing a transmit power, so as to implement service migration; after the service migration is completed, the first access network device may close the to-be-closed cell. The first access network device may also use another manner of the prior art to implement the foregoing handover process, which is not limited to this embodiment.

In the process of migrating a service of the to-be-closed cell of the first access network device to the second access network device, if the UE cannot hand over or connect to the second access network device because of reasons such as load congestion of a second access network device, the following solution may be used: if the first access network device uses a manner of decreasing power, current power level is kept, and after a time T, handing over the UE is tried again by decreasing the power. If the first access network device does not use the manner of decreasing the power, a working state is kept, and handing over the UE is tried again after the time T.

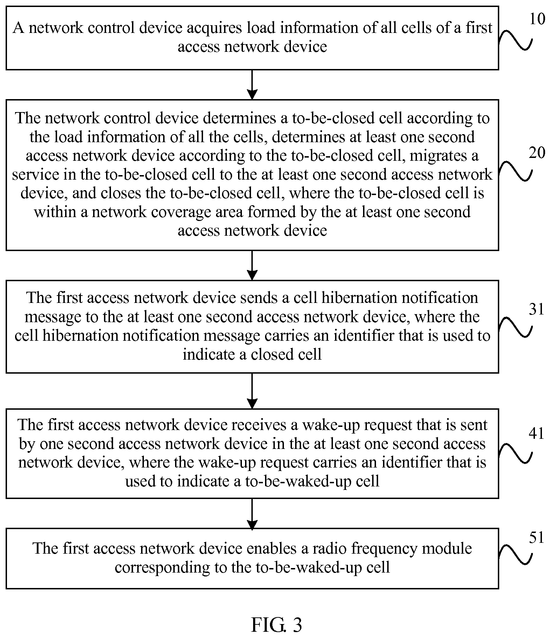

FIG. 3 is a flowchart of a third heterogeneous network energy saving method according to an embodiment of the present invention. As shown in FIG. 3, in this embodiment, after the network control device migrates a service in the to-be-closed cell to the at least one second access network device, and closes the to-be-closed cell, as described in step 20, the method may further include:
Step 31. The first access network device sends a cell hibernation notification message to the at least one second access network device, where the cell hibernation notification message carries an identifier that is used to indicate a closed cell.

Specifically, after closing a cell, the first access network device notifies the second access network device of which is the closed cell.

In this embodiment, after the network control device closes the to-be-closed cell, as described in step 20, the method further includes:
Step 41. The first access network device receives a wake-up request that is sent by one second access network device of the at least one second access network device, where the wake-up request carries an identifier that is used to indicate a to-be-waked-up cell.
Step 51. The first access network device enables a radio frequency module corresponding to the to-be-waked-up cell.

Specifically, the second access network device may further detect load condition of the second access network device. When a load amount is relatively large and the load amount of the second access network device needs to be offloaded by the first access network device, the second access network device may further send a wake-up request to the first access network device, so as to wake up the closed cell. The second access network device may exchange signaling with the first access network device by using an X2 interface. When receiving the wake-up request, the first access network device selects a to-be-waked-up cell from the closed cell, where a geographic area corresponding to the to-be-waked-up cell should be within a network coverage area of the second access network device. The wake-up request may further carry an identifier of a cell to indicate that a load amount of the cell of the second access network device is relatively large and offloading needs to be performed, so that the first access network device determines a closed cell that has a same coverage area as the cell of the second access network device and that is of the first access network device as the to-be-waked-up cell. The first access network device enables a radio frequency module corresponding to the to-be-waked-up cell, that is, the cell is waked up. The first access network device may gradually increase a transmit power of the radio frequency module to gradually increase a coverage radius of the cell, and may also directly enable the cell by using a maximum transmit power. The UE may hand over, by itself, to the cell of the first access network device according to detected signal quality, so as to implement offloading for the second access network device. The first access network device may also notify the second access network device of cells that are waked up. The second access network device may send a handover instruction to UE served by the second access network device, so as to hand over the UE to the first access network device.

In this embodiment, that the first access network device enables a radio frequency module corresponding to the to-be-waked-up cell, as described in step 51, may include:
enabling, by the first access network device by using a maximum transmit power, the radio frequency module corresponding to the to-be-waked-up cell; or
gradually increasing, by the first access network device, a transmit power of the radio frequency module corresponding to the to-be-waked-up cell.

In an embodiment of the present invention, generally, a small-cell base station is used to provide a network resource of a capacity enhancement type. However, in some scenarios, the small-cell base station also has a coverage enhancement function, for example, a function of filling a coverage hole, that is, filling a coverage hole. In some scenarios, the small-cell base station generally provides both of the foregoing functions. Therefore, it is very important to determine a specific function of the small-cell base station by using a method. Specifically, UE may be used to assist in determining the function of the small-cell base station (filling a coverage hole or offloading/capacity enhancement).

Specifically, a nearby macro network may be configured, in the small-cell base station, as a neighboring cell, and then UE that camps on the small-cell base station or implements a service when camping on the small-cell base station may be used to assist in measuring signal strength of a macro cell, so as to determine whether coverage of the macro cell exists in an area in which the UE is located and then determine the function of the small-cell base station. Specifically, for UE that camps on a small-cell base station and that is in an IDLE state, a reselection measurement threshold is adjusted to facilitate the UE in initiating measurement on a neighboring cell. If signal level information of any macro cell does not exist in a measurement report reported by the UE to the small-cell base station, or signal levels RSCP or RSRP of all macro cells are less than a threshold (for example, RSCP <= -115 dBm), it determines that a macro cell coverage hole exists in the coverage area, and it simultaneously proves that a cell corresponding to the small-cell base station is not an offloading-only cell but a cell with a function of filling a coverage hole/coverage enhancement.

For UE that camps on a small-cell base station and that is in a connected state, in a handover process, UE may further initiate measurement on a neighboring cell. If signal level information of any macro cell does not exist in a measurement report reported by the UE to the small-cell base station, or signal levels RSCP of all macro cells are less than a threshold (for example, -115 dBm), it is considered that a macro cell coverage hole exists in the coverage area. A cell corresponding to the small-cell base station is not an offloading-only cell.

It may further collect measurement reports of the UE in the IDLE state and the UE in the connected state, and perform comprehensive determining processing according to a quantity of cells and a signal level that are in the measurement reports.

The foregoing method supports both networking of a macro cell and a micro cell that operate at a same frequency and networking of a macro cell and a micro cell that operate at different frequencies. For the networking of a macro cell and a micro cell that operate at different frequencies, a threshold for measurement of signals at different frequencies may be decreased in the small-cell base station, so that the UE that camps on the small-cell base station can easily initiate measurement of the signals at different frequencies to measure signal quality of a macro cell. The determining of the signal quality of the macro cell may be based on statistics collected or statistics accumulated for a period of time. For example, the function of the small-cell base station is determined based on statistics collected within one week or a longer time, so as to ensure that the UE can fully traverse all areas in the coverage area of the small-cell base station. A coverage hole of a macro cell is determined in real time. As long as no macro cell information exists in a measurement report, or a signal level RSCP or RSRP of a macro cell is less than a threshold, it can be determined that a location is in the coverage hole of the macro cell.

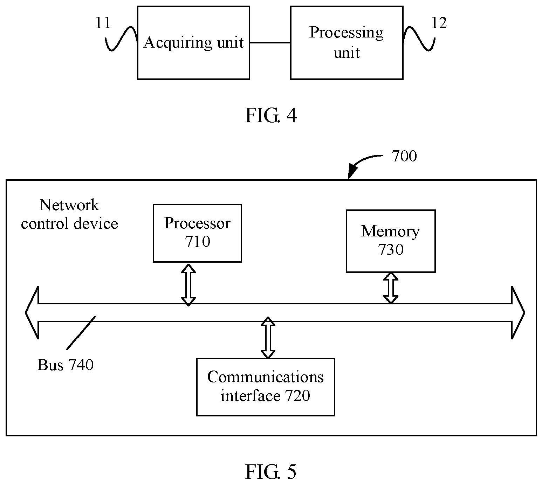

According to the foregoing embodiments, in a HetNet networking scenario, UE that camps on a small-cell base station is used to assist in performing measurement, so as to detect a coverage hole of a macro network and determine a function of the small-cell base station (filling a coverage hole/coverage enhancement or offloading/capacity enhancement), which may be used as a condition for determining whether a cell covered by the small-cell base station can be closed. FIG. 4 is a schematic diagram of a structure of a first network control device according to an embodiment of the present invention. As shown in FIG. 4, the network control device provided in this embodiment may specifically implement each step of the heterogeneous network energy saving method provided in any embodiment of the present invention, and a specific implementation process is not described in details herein again.

The network control device provided in this embodiment specifically includes:
an acquiring unit 11, configured to acquire load information of all cells of a first access network device; and
a processing unit 12, configured to: determine a to-be-closed cell according to the load information of all the cells that is acquired by the acquiring unit 11, determine at least one second access network device according to the to-be-closed cell, migrate a service in the to-be-closed cell to the at least one second access network device, and close the to-be-closed cell, where the to-be-closed cell is within a network coverage area formed by the at least one second access network device.

According to the network control device provided in this embodiment, a load of a cell of the first access network device that provides a network resource of a capacity enhancement type is monitored; when the cell bears a small service load amount, a service of the cell is migrated to the second access network device that is used to provide a network resource of a coverage type, and the cell is closed, which implements energy saving processing on a heterogeneous network and avoids a resource waste.

In this embodiment, the processing unit 12 may be further configured to determine a cell whose load information does not exceed a first preset threshold as the to-be-closed cell.

In this embodiment, the processing unit 12 may be further configured to: determine the at least one second access network device according to the to-be-closed cell; separately send a first load information acquiring request to the at least one second access network device, and receive load information separately returned by the at least one second access network device; and determine, according to the load information of the to-be-closed cell and load information of the at least one second access network device, whether the at least one second access network device can bear a load of the to-be-closed cell, and if the at least one second access network device can bear the load of the to-be-closed cell, migrate the service in the to-be-closed cell to the at least one second access network device.

In this embodiment, the acquiring unit 11 may be further configured to: send a second load information acquiring request to the first access network device, and receive the load information of all the cells that is returned by the first access network device.

In this embodiment, the processing unit 12 may be further configured to: send a first handover command to the first access network device, where the first handover command carries an identifier that is used to indicate the to-be-closed cell, so that the first access network device hands over and connects user equipment UE served by the to-be-closed cell to the at least one second access network device; and close the to-be-closed cell.

In this embodiment, the processing unit 12 may be further configured to: receive a cell hibernation notification message sent by the first access network device, and send the cell hibernation notification message to the at least one second access network device, where the cell hibernation notification message carries an identifier that is used to indicate the closed cell.

In this embodiment, the processing unit 12 may be further configured to: receive a first wake-up request that is sent by one second access network device of the at least one second access network device; and select a to-be-waked-up cell from a closed cell of the first access network device and send a second wake-up request to the first access network device, where the second wake-up request carries an identifier that is used to indicate the to-be-waked-up cell, so that the first access network device enables a radio frequency module corresponding to the to-be-waked-up cell.

In this embodiment, the network control device is the first access network device. Correspondingly, the acquiring unit 11 may be further configured to acquire the load information of all the cells by means of measurement.

In this embodiment, the processing unit 12 may be further configured to hand over and connect UE served by the to-be-closed cell to the at least one second access network device and close the to-be-closed cell.

In this embodiment, the processing unit 12 may be further configured to: send a second handover command to the UE served by the to-be-closed cell, so that the UE hands over and connects, according to the second handover command, to one second access network device of the at least one second access network device; or gradually decrease a transmit power of a radio frequency module corresponding to the to-be-closed cell, so that when detecting that signal quality of the to-be-closed cell is lower than a preset value, the UE connects to one second access network device of the at least one second access network device.

In this embodiment, the processing unit 12 may be further configured to send a cell hibernation notification message to the at least one second access network device, where the cell hibernation notification message carries an identifier that is used to indicate a closed cell.

In this embodiment, the processing unit 12 may be further configured to: receive a wake-up request that is sent by one second access network device of the at least one second access network device, where the wake-up request carries an identifier that is used to indicate a to-be-waked-up cell; and enable a radio frequency module corresponding to the to-be-waked-up cell.

In this embodiment, the processing unit 12 may be further configured to: enable, by using a maximum transmit power, the radio frequency module corresponding to the to-be-waked-up cell; or gradually increase a transmit power of the radio frequency module corresponding to the to-be-waked-up cell.

FIG. 5 is a schematic diagram of a structure of a second network control device according to an embodiment of the present invention. As shown in FIG. 5, a network control device 700 provided in this embodiment may specifically implement each step of the heterogeneous network energy saving method provided in any embodiment of the present invention, and a specific implementation process is not described in details herein again.

The network control device 700 provided in this embodiment specifically includes: a processor 710, a communications interface 720, a memory 730, and a bus 740.

The processor 710, the communications interface 720, and the memory 730 are interconnected by using the bus 740.

The communications interface 720 is configured to acquire load information of all cells of a first access network device.

The memory 730 is configured to store an instruction or data.

The processor 710 invokes the instruction stored in the memory 730, so as to implement: determining a to-be-closed cell according to the load information of all the cells, determining at least one second access network device according to the to-be-closed cell, migrating a service in the to-be-closed cell to the at least one second access network device, and closing the to-be-closed cell, where the to-be-closed cell is within a network coverage area formed by the at least one second access network device.

In this embodiment, the processor 710 is further configured to determine a cell whose load information does not exceed a first preset threshold as the to-be-closed cell.

In this embodiment, the processor 710 is further configured to determine the at least one second access network device according to the to-be-closed cell.

The communications interface 720 is further configured to: separately send a first load information acquiring request to the at least one second access network device, and receive load information separately returned by the at least one second access network device.

The processor 710 is further configured to: determine, according to the load information of the to-be-closed cell and load information of the at least one second access network device, whether the at least one second access network device can bear a load of the to-be-closed cell, and if the at least one second access network device can bear the load of the to-be-closed cell, migrate the service in the to-be-closed cell to the at least one second access network device.

In this embodiment, the communications interface 720 is further configured to: send a second load information acquiring request to the first access network device, and receive the load information of all the cells that is returned by the first access network device.

In this embodiment, the communications interface 720 is further configured to: send a first handover command to the first access network device, where the first handover command carries an identifier that is used to indicate the to-be-closed cell, so that the first access network device hands over and connects user equipment UE served by the to-be-closed cell to the at least one second access network device; and close the to-be-closed cell.

In this embodiment, the communications interface 720 is further configured to: receive a cell hibernation notification message sent by the first access network device, and send the cell hibernation notification message to the at least one second access network device, where the cell hibernation notification message carries an identifier that is used to indicate the closed cell.

In this embodiment, the communications interface 720 is further configured to receive a first wake-up request that is sent by one second access network device of the at least one second access network device.

The processor 710 is further configured to select a to-be-waked-up cell from a closed cell of the first access network device.

The processor 720 is further configured to send a second wake-up request to the first access network device, where the second wake-up request carries an identifier that is used to indicate the to-be-waked-up cell, so that the first access network device enables a radio frequency module corresponding to the to-be-waked-up cell.

In this embodiment, the network control device is the first access network device.

The communications interface 720 is further configured to acquire the load information of all the cells by means of measurement.

In this embodiment, the processing unit 710 is further configured to hand over and connect UE served by the to-be-closed cell to the at least one second access network device and close the to-be-closed cell.

In this embodiment, the communications interface 720 is further configured to send a second handover command to the UE served by the to-be-closed cell, so that the UE hands over and connects, according to the second handover command, to one second access network device of the at least one second access network device; or
the processor 710 is further configured to gradually decrease a transmit power of a radio frequency module corresponding to the to-be-closed cell, so that when detecting that signal quality of the to-be-closed cell is lower than a preset value, the UE connects to one second access network device of the at least one second access network device.

In this embodiment, the communications interface 720 is further configured to send a cell hibernation notification message to the at least one second access network device, where the cell hibernation notification message carries an identifier that is used to indicate a closed cell.

In this embodiment, the communications interface 720 is further configured to receive a wake-up request that is sent by one second access network device of the at least one second access network device, where the wake-up request carries an identifier that is used to indicate a to-be-waked-up cell.

The processor 710 is further configured to enable a radio frequency module corresponding to the to-be-waked-up cell.

In this embodiment, the processor 710 is further configured to: enable, by using a maximum transmit power, the radio frequency module corresponding to the to-be-waked-up cell; or gradually increase a transmit power of the radio frequency module corresponding to the to-be-waked-up cell.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

## Claims

1. A heterogeneous network energy saving method, comprising:
acquiring, by a network control device, load information of all cells of a first access network device (step 10);
determining, by the network control device, a to-be-closed cell according to the load information of all the cells, and determining at least one second access network device according to the to-be-closed cell (step 20),
migrating a service in the to-be-closed cell to the at least one second access network device (step 20), and
closing the to-be-closed cell, wherein the to-be-closed cell is within a network coverage area formed by the at least one second access network device (step 20),
**characterized in that**
the acquiring, by the network control device, load information of all cells of the first access network device comprises:
sending, by the network control device, a second load information acquiring request to the first access network device, and receiving the load information of all the cells that is returned by the first access network device,
that after the closing, by the network control device, the to-be-closed cell, the method further comprises:
receiving, by the network control device, a first wake-up request that is sent by one second access network device of the at least one second access network device (step 40); and
selecting, by the network control device, a to-be-waked-up cell from closed cells of the first access network device by determining a closed cell that has a same coverage area as the cell of the second access network device and that is of the first access network device as the to-be-waked-up cell and sending a second wake-up request to the first access network device, wherein the second wake-up request carries an identifier that is used to indicate the to-be-waked-up cell, so that the first access network device enables a radio frequency module corresponding to the to-be-waked-up cell (step 50).

2. The heterogeneous network energy saving method according to claim 1, wherein the determining, by the network control device, a to-be-closed cell according to the load information of all the cells comprises:
determining, by the network control device, a cell whose load information does not exceed a first preset threshold as the to-be-closed cell.

3. The heterogeneous network energy saving method according to claim 1 or 2, wherein the determining, by the network control device, at least one second access network device according to the to-be-closed cell, and migrating a service in the to-be-closed cell to the at least one second access network device comprises:
determining, by the network control device, the at least one second access network device according to the to-be-closed cell;
separately sending, by the network control device, a first load information acquiring request to the at least one second access network device, and receiving load information separately returned by the at least one second access network device; and
determining, by the network control device according to the load information of the to-be-closed cell and load information of the at least one second access network device, whether the at least one second access network device can bear a load of the to-be-closed cell, and if the at least one second access network device can bear the load of the to-be-closed cell, migrating the service in the to-be-closed cell to the at least one second access network device.

4. The heterogeneous network energy saving method according to any of the claims 1 to 3, wherein the migrating, by the network control device, a service in the to-be-closed cell to the at least one second access network device, and closing the to-be-closed cell comprises:
sending, by the network control device, a first handover command to the first access network device, wherein the first handover command carries an identifier that is used to indicate the to-be-closed cell, so that the first access network device hands over and connects user equipment, UE, served by the to-be-closed cell to the at least one second access network device; and closing the to-be-closed cell.

5. The heterogeneous network energy saving method according to any of the claims 1 to 3, wherein after the migrating, by the network control device, a service in the to-be-closed cell to the at least one second access network device, and closing the to-be-closed cell, the method further comprises:
receiving, by the network control device, a cell hibernation notification message sent by the first access network device, and sending the cell hibernation notification message to the at least one second access network device, wherein the cell hibernation notification message carries an identifier that is used to indicate a closed cell (step 30).

6. The heterogeneous network energy saving method according to any one of claims 1 to 3, wherein the network control device is the first access network device, and
the acquiring, by a network control device, load information of all cells of a first access network device comprises:
acquiring, by the first access network device by means of measurement, the load information of all the cells.

7. The heterogeneous network energy saving method according to claim 6, wherein the migrating, by the network control device, a service in the to-be-closed cell to the at least one second access network device, and closing the to-be-closed cell comprises:
handing over and connecting, by the first access network device, UE served by the to-be-closed cell to the at least one second access network device, and closing the to-be-closed cell.

8. A network control device, comprising:
an acquiring unit (11), configured to acquire load information of all cells of a first access network device; and
a processing unit (12), configured to: determine a to-be-closed cell according to the load information of all the cells that is acquired by the acquiring unit (11), determine at least one second access network device according to the to-be-closed cell, migrate a service in the to-be-closed cell to the at least one second access network device, and close the to-be-closed cell, wherein the to-be-closed cell is within a network coverage area formed by the at least one second access network device,
**characterized in that** the acquiring unit (11) is configured to send a second load information acquiring request to the first access network device, and receiving the load information of all the cells that is returned by the first access network device,
that after the closing, by the network control device, the network control device is configured to
receive a first wake-up request that is sent by one second access network device of the at least one second access network device; and
select a to-be-waked-up cell from closed cells of the first access network device by determining a closed cell that has a same coverage area as the cell of the second access network device and that is of the first access network device as the to-be-waked-up cell and sending a second wake-up request to the first access network device, wherein the second wake-up request carries an identifier that is used to indicate the to-be-waked-up cell, so that the first access network device enables a radio frequency module corresponding to the to-be-waked-up cell.

9. The network control device according to claim 8, wherein the processing unit (12) is further configured to determine a cell whose load information does not exceed a first preset threshold as the to-be-closed cell.

10. The network control device according to claim 8 or 9, wherein the processing unit (12) is further configured to: determine the at least one second access network device according to the to-be-closed cell; separately send a first load information acquiring request to the at least one second access network device, and receive load information separately returned by the at least one second access network device; and determine, according to the load information of the to-be-closed cell and load information of the at least one second access network device, whether the at least one second access network device can bear a load of the to-be-closed cell, and if the at least one second access network device can bear the load of the to-be-closed cell, migrate the service in the to-be-closed cell to the at least one second access network device.

11. The network control device according to any one of claims 8 to 10, wherein the acquiring unit (11) is further configured to: send a second load information acquiring request to the first access network device, and receive load information of all the cells that is returned by the first access network device.

12. The network control device according to claim 11, wherein the processing unit (12) is further configured to: send a first handover command to the first access network device, wherein the first handover command carries an identifier that is used to indicate the to-be-closed cell, so that the first access network device hands over and connects user equipment, UE, served by the to-be-closed cell to the at least one second access network device; and close the to-be-closed cell.

13. The network control device according to claim 11, wherein the processing unit (12) is further configured to: receive a cell hibernation notification message sent by the first access network device, and send the cell hibernation notification message to the at least one second access network device, wherein the cell hibernation notification message carries an identifier that is used to indicate a closed cell.

## Patentansprüche

1. Energiesparverfahren für ein heterogenes Netzwerk, das Folgendes umfasst:
Erlangen, durch eine Netzwerksteuerungsvorrichtung, der Lastinformationen von allen Zellen einer ersten Zugangsnetzwerksvorrichtung (Schritt 10);
Bestimmen, durch die Netzwerksteuerungsvorrichtung, einer Zelle, die geschlossen werden soll, gemäß den Lastinformationen von all den Zellen, und Bestimmen mindestens einer zweiten Zugangsnetzwerksvorrichtung gemäß der Zelle, die geschlossen werden soll (Schritt 20),
Verschieben eines Dienstes in der Zelle, die geschlossen werden soll, zu der mindestens einen zweiten Zugangsnetzwerksvorrichtung (Schritt 20), und
Schließen der Zelle, die geschlossen werden soll, wobei die Zelle, die geschlossen werden soll, innerhalb eines Versorgungsbereichs eines Netzwerkes liegt, der durch die mindestens eine zweite Zugangsnetzwerksvorrichtung ausgebildet wird (Schritt 20),
**dadurch gekennzeichnet, dass**
das Erlangen, durch die Netzwerksteuerungsvorrichtung, der Lastinformationen von allen Zellen der ersten Zugangsnetzwerksvorrichtung Folgendes umfasst:
Senden, durch die Netzwerksteuerungsvorrichtung, einer zweiten Lastinformationserlangungsanforderung an die erste Zugangsnetzwerksvorrichtung, und Empfangen der Lastinformationen von all den Zellen, die durch die erste Zugangsnetzwerksvorrichtung zurückgesendet werden,
dass, nach dem Schließen, durch die Netzwerksteuerungsvorrichtung, der Zelle, die geschlossen werden soll, das Verfahren des Weiteren Folgendes umfasst:
Empfangen, durch die Netzwerksteuerungsvorrichtung, einer ersten Aufweckanforderung, die durch eine einzige zweite Zugangsnetzwerksvorrichtung der mindestens einen zweiten Zugangsnetzwerksvorrichtung (Schritt 40) gesendet wird; und
Auswählen, durch die Netzwerksteuerungsvorrichtung, einer Zelle, die aus geschlossenen Zellen der ersten Zugangsnetzwerksvorrichtung durch Bestimmen einer geschlossenen Zelle aufgeweckt werden soll, welche denselben Versorgungsbereich wie die Zelle der zweiten Zugangsnetzwerksvorrichtung hat, und die zu der ersten Zugangsnetzwerksvorrichtung wie die Zelle gehört, die aufgeweckt werden soll, und Senden einer zweiten Aufweckanforderung an die erste Zugangsnetzwerksvorrichtung, wobei die zweite Aufweckanforderung eine Identifizierung befördert, die verwendet wird, um die Zelle anzuzeigen, die aufgeweckt werden soll, so dass die erste Zugangsnetzwerksvorrichtung ein Funkfrequenzmodul aktiviert, das der Zelle entspricht, die aufgeweckt werden soll (Schritt 50).

2. Energiesparverfahren für ein heterogenes Netzwerk nach Anspruch 1, wobei das Bestimmen, durch die Netzwerksteuerungsvorrichtung, einer Zelle, die geschlossen werden soll, gemäß den Lastinformationen von all den Zellen, Folgendes umfasst:
Bestimmen, durch die Netzwerksteuerungsvorrichtung, einer Zelle, deren Lastinformationen einen ersten zuvor eingestellten Schwellenwert nicht überschreiten, als die Zelle, die geschlossen werden soll.

3. Energiesparverfahren für ein heterogenes Netzwerk nach Anspruch 1 oder 2, wobei das Bestimmen, durch die Netzwerksteuerungsvorrichtung, mindestens einer zweiten Zugangsnetzwerksvorrichtung gemäß der Zelle, die geschlossen werden soll, und das Verschieben eines Dienstes in der Zelle, die geschlossen werden soll, zu der mindestens einen zweiten Zugangsnetzwerksvorrichtung, Folgendes umfasst:
Bestimmen, durch die Netzwerksteuerungsvorrichtung, der mindestens einen zweiten Zugangsnetzwerksvorrichtung gemäß der Zelle, die geschlossen werden soll;
separates Senden, durch die Netzwerksteuerungsvorrichtung, einer ersten Lastinformationserlangungsanforderung an die mindestens eine zweite Zugangsnetzwerksvorrichtung, und Empfangen der Lastinformationen, die durch die mindestens eine zweite Zugangsnetzwerksvorrichtung separat zurückgesendet werden; und
Bestimmen, durch die Netzwerksteuerungsvorrichtung, gemäß den Lastinformationen der Zelle, die geschlossen werden soll, und den Lastinformationen der mindestens einen zweiten Zugangsnetzwerksvorrichtung, ob die mindestens eine zweite Zugangsnetzwerksvorrichtung eine Last der Zelle, die geschlossen werden soll, aufnehmen kann, und, falls die mindestens eine zweite Zugangsnetzwerksvorrichtung die Last der Zelle, die geschlossen werden soll, aufnehmen kann, Verschieben des Dienstes in der Zelle, die geschlossen werden soll, zu der mindestens einen zweiten Zugangsnetzwerksvorrichtung.

4. Energiesparverfahren für ein heterogenes Netzwerk nach einem der Ansprüche 1 bis 3, wobei das Verschieben, durch die Netzwerksteuerungsvorrichtung, eines Dienstes in der Zelle, die geschlossen werden soll, zu der mindestens einen zweiten Zugangsnetzwerksvorrichtung, und das Schließen der Zelle, die geschlossen werden soll, Folgendes umfasst:
Senden, durch die Netzwerksteuerungsvorrichtung, eines ersten Übergabebefehls an die erste Zugangsnetzwerksvorrichtung, wobei der erste Übergabebefehl eine Identifizierung befördert, die verwendet wird, um die Zelle, die geschlossen werden soll, anzuzeigen, so dass die erste Zugangsnetzwerksvorrichtung Benutzerequipment, (User Equipment) UE, das durch die Zelle, die geschlossen werden soll, bedient wird, an die mindestens eine zweite Zugangsnetzwerksvorrichtung übergibt und verbindet; und Schließen der Zelle, die geschlossen werden soll.

5. Energiesparverfahren für ein heterogenes Netzwerk nach einem der Ansprüche 1 bis 3, wobei nach dem Verschieben, durch die Netzwerksteuerungsvorrichtung, eines Dienstes in der Zelle, die geschlossen werden soll, zu der mindestens einen zweiten Zugangsnetzwerksvorrichtung, und dem Schließen der Zelle, die geschlossen werden soll, das Verfahren des Weiteren Folgendes umfasst:
Empfangen, durch die Netzwerksteuerungsvorrichtung, einer Hibernationsbenachrichtigungsmitteilung einer Zelle, die durch die erste Zugangsnetzwerksvorrichtung gesendet wird, und Senden der Hibernationsbenachrichtigungsmitteilung der Zelle an die mindestens eine zweite Zugangsnetzwerksvorrichtung, wobei die Hibernationsbenachrichtigungsmitteilung der Zelle eine Identifizierung befördert, die verwendet wird, um eine geschlossene Zelle anzuzeigen (Schritt 30).

6. Energiesparverfahren für ein heterogenes Netzwerk nach einem der Ansprüche 1 bis 3, wobei es sich bei der Netzwerksteuerungsvorrichtung um die erste Zugangsnetzwerksvorrichtung handelt, und
das Erlangen, durch eine Netzwerksteuerungsvorrichtung, der Lastinformationen von allen Zellen einer ersten Zugangsnetzwerksvorrichtung Folgendes umfasst:
Erlangen, durch die erste Zugangsnetzwerksvorrichtung durch Mittel zum Messen, der Lastinformationen von all den Zellen.

7. Energiesparverfahren für ein heterogenes Netzwerk nach Anspruch 6, wobei das Verschieben, durch die Netzwerksteuerungsvorrichtung, eines Dienstes in der Zelle, die geschlossen werden soll, zu der mindestens einen zweiten Zugangsnetzwerksvorrichtung, und das Schließen der Zelle, die geschlossen werden soll, Folgendes umfasst:
Übergeben und Verbinden, durch die erste Zugangsnetzwerksvorrichtung, des UE, das durch die Zelle, die geschlossen werden soll, bedient wird, an die mindestens eine zweite Zugangsnetzwerksvorrichtung, und Schließen der Zelle, die geschlossen werden soll.

8. Netzwerksteuerungsvorrichtung, die Folgendes umfasst:
eine Erlangungseinheit (11), die dazu ausgestaltet ist, die Lastinformationen von allen Zellen einer ersten Zugangsnetzwerksvorrichtung zu erlangen; und
eine Verarbeitungseinheit (12), die zu Folgendem konfiguriert ist: eine Zelle, die geschlossen werden soll, gemäß den Lastinformationen von all den Zellen zu bestimmen, die durch die Erlangungseinheit (11) erlangt werden, mindestens eine zweite Zugangsnetzwerksvorrichtung gemäß der Zelle, die geschlossen werden soll, zu bestimmen, einen Dienst in der Zelle, die geschlossen werden soll, zu der mindestens einen zweiten Zugangsnetzwerksvorrichtung zu verschieben, und die Zelle, die geschlossen werden soll, zu schließen, wobei die Zelle, die geschlossen werden soll, innerhalb eines Netzwerkversorgungsbereiches liegt, der durch die mindestens eine zweite Zugangsnetzwerksvorrichtung ausgebildet wird,
**dadurch gekennzeichnet, dass** die Erlangungseinheit (11) dazu ausgestaltet ist, eine zweite Lastinformationserlangungsanforderung an die erste Zugangsnetzwerksvorrichtung zu senden, und Empfangen der Lastinformationen von all den Zellen, die durch die erste Zugangsnetzwerksvorrichtung zurückgesendet werden,
dass nach dem Schließen, durch die Netzwerksteuerungsvorrichtung, die Netzwerksteuerungsvorrichtung dazu ausgestaltet ist,
eine erste Aufweckanforderung zu empfangen, die durch eine einzige zweite Zugangsnetzwerksvorrichtung der mindestens einen zweiten Zugangsnetzwerksvorrichtung gesendet wird; und
eine Zelle, die aufgeweckt werden soll, aus geschlossenen Zellen der ersten Zugangsnetzwerksvorrichtung durch Bestimmen einer geschlossenen Zelle auszuwählen, welche denselben Versorgungsbereich wie die Zelle der zweiten Zugangsnetzwerksvorrichtung hat, und die zu der ersten Zugangsnetzwerksvorrichtung wie die Zelle gehört, die aufgeweckt werden soll, und Senden einer zweiten Aufweckanforderung an die erste Zugangsnetzwerksvorrichtung, wobei die zweite Aufweckanforderung eine Identifizierung befördert, die verwendet wird, um die Zelle anzuzeigen, die aufgeweckt werden soll, so dass die erste Zugangsnetzwerksvorrichtung ein Funkfrequenzmodul aktiviert, das der Zelle entspricht, die aufgeweckt werden soll.

9. Netzwerksteuerungsvorrichtung nach Anspruch 8, wobei die Verarbeitungseinheit (12) des Weiteren dazu ausgestaltet ist, eine Zelle, deren Lastinformationen einen ersten zuvor eingestellten Schwellenwert nicht überschreiten, als die Zelle, die geschlossen werden soll, zu bestimmen.

10. Netzwerksteuerungsvorrichtung nach Anspruch 8 oder 9, wobei die Verarbeitungseinheit (12) des Weiteren dazu ausgestaltet ist: die mindestens eine zweite Zugangsnetzwerksvorrichtung gemäß der Zelle, die geschlossen werden soll, zu bestimmen; eine erste Lastinformationserlangungsanforderung an die mindestens eine zweite Zugangsnetzwerksvorrichtung getrennt zu senden, und die Lastinformationen zu empfangen, die durch die mindestens eine zweite Zugangsnetzwerksvorrichtung getrennt zurückgesendet werden; und gemäß den Lastinformationen der Zelle, die geschlossen werden soll, und den Lastinformationen der mindestens einen zweiten Zugangsnetzwerksvorrichtung zu bestimmen, ob die mindestens eine zweite Zugangsnetzwerksvorrichtung eine Last der Zelle, die geschlossen werden soll, aufnehmen kann, und, falls die mindestens eine zweite Zugangsnetzwerksvorrichtung die Last der Zelle, die geschlossen werden soll, aufnehmen kann, den Dienst in der Zelle, die geschlossen werden soll, zu der mindestens einen zweiten Zugangsnetzwerksvorrichtung zu verschieben.

11. Netzwerksteuerungsvorrichtung nach einem der Ansprüche 8 bis 10, wobei die Erlangungseinheit (11) des Weiteren dazu ausgestaltet ist: eine zweite Lastinformationserlangungsanforderung an die erste Zugangsnetzwerksvorrichtung zu senden, und die Lastinformationen von all den Zellen, die durch die erste Zugangsnetzwerksvorrichtung zurückgesendet werden, zu empfangen.

12. Netzwerksteuerungsvorrichtung nach Anspruch 11, wobei die Verarbeitungseinheit (12) des Weiteren dazu ausgestaltet ist: einen ersten Übergabebefehl an die erste Netzwerksteuerungsvorrichtung zu senden, wobei der erste Übergabebefehl eine Identifizierung befördert, die dazu verwendet wird, die Zelle, die geschlossen werden soll, anzuzeigen, so dass die erste Zugangsnetzwerksvorrichtung Benutzerequipment, UE, das durch die Zelle, die geschlossen werden soll, bedient wird, an die mindestens eine zweite Zugangsnetzwerksvorrichtung übergibt und verbindet; und die Zelle, die geschlossen werden soll, zu schließen.

13. Netzwerksteuerungsvorrichtung nach Anspruch 11, wobei die Verarbeitungseinheit (12) des Weiteren dazu ausgestaltet ist: eine Hibernationsbenachrichtigungsmitteilung einer Zelle, die durch die erste Zugangsnetzwerksvorrichtung gesendet wird, zu empfangen, und die Hibernationsbenachrichtigungsmitteilung der Zelle an die mindestens eine zweite Zugangsnetzwerksvorrichtung zu senden, wobei die Hibernationsbenachrichtigungsmitteilung der Zelle eine Identifizierung befördert, die verwendet wird, um eine geschlossene Zelle anzuzeigen.

## Revendications

1. Procédé d'économie d'énergie de réseau hétérogène consistant :
à acquérir, au moyen d'un dispositif de commande de réseau, des informations de charge de toutes les cellules d'un premier dispositif de réseau d'accès (étape 10) ;
à déterminer, au moyen du dispositif de commande de réseau, une cellule qui doit être fermée en fonction des informations de charge de toutes les cellules, et à déterminer au moins un second dispositif de réseau d'accès en fonction de la cellule qui doit être fermée (étape 20),
à faire migrer un service dans la cellule qui doit être fermée, vers le ou les seconds dispositifs de réseau d'accès (étape 20) et
à fermer la cellule qui doit être fermée, dans lequel la cellule qui doit être fermée, se trouve dans une zone de couverture de réseau formée par le ou les seconds dispositifs de réseau d'accès (étape 20),
**caractérisé en ce**
**que** l'acquisition, au moyen du dispositif de commande de réseau, d'informations de charge de toutes les cellules du premier dispositif de réseau d'accès consiste :
à envoyer, au moyen du dispositif de commande de réseau, une seconde demande d'acquisition d'informations de charge au premier dispositif de réseau d'accès et à recevoir les informations de charge de toutes les cellules qui sont renvoyées par le premier dispositif de réseau d'accès,
**qu'**après la fermeture, au moyen du dispositif de commande de réseau, de la cellule qui doit être fermée, le procédé consiste en outre :
à recevoir, au moyen du dispositif de commande de réseau, une première demande de réveil qui est envoyée par un second dispositif de réseau d'accès du ou des seconds dispositifs de réseau d'accès (étape 40) ; et
à sélectionner, au moyen du dispositif de commande de réseau, une cellule qui doit être réveillée, parmi les cellules fermées du premier dispositif de réseau d'accès en déterminant une cellule fermée qui présente une même zone de couverture que celle de la cellule du second dispositif de réseau d'accès et qui est du premier dispositif de réseau d'accès, en tant que cellule qui doit être réveillée et à envoyer une seconde demande de réveil au premier dispositif de réseau d'accès, dans lequel la seconde demande de réveil comporte un identifiant qui est utilisé pour indiquer la cellule qui doit être réveillée, de telle sorte que le premier dispositif de réseau d'accès active un module radiofréquence correspondant à la cellule qui doit être réveillée (étape 50).

2. Procédé d'économie d'énergie de réseau hétérogène selon la revendication 1, dans lequel la détermination, au moyen du dispositif de commande de réseau, d'une cellule qui doit être fermée en fonction des informations de charge de toutes les cellules, consiste :
à déterminer, au moyen du dispositif de commande de réseau, une cellule dont des informations de charge ne dépassent pas un premier seuil prédéterminé, en tant que cellule qui doit être fermée.

3. Procédé d'économie d'énergie de réseau hétérogène selon la revendication 1 ou 2, dans lequel la détermination, au moyen du dispositif de commande de réseau, d'au moins un second dispositif de réseau d'accès en fonction de la cellule qui doit être fermée, et la migration d'un service dans la cellule qui doit être fermée, vers le ou les seconds dispositifs de réseau d'accès consistent :
à déterminer, au moyen du dispositif de commande de réseau, le ou les seconds dispositifs de réseau d'accès en fonction de la cellule qui doit être fermée ;
à envoyer séparément, au moyen du dispositif de commande de réseau, une première demande d'acquisition d'informations de charge au ou aux seconds dispositifs de réseau d'accès et à recevoir des informations de charge renvoyées séparément par le ou les seconds dispositifs de réseau d'accès ; et
à déterminer, au moyen du dispositif de commande de réseau, en fonction des informations de charge de la cellule qui doit être fermée, et des informations de charge du ou des seconds dispositifs de réseau d'accès, si le ou les seconds dispositifs de réseau d'accès peuvent supporter une charge de la cellule qui doit être fermée et, si le ou les seconds dispositifs de réseau d'accès peuvent supporter la charge de la cellule qui doit être fermée, à faire migrer le service dans la cellule qui doit être fermée, vers le ou les seconds dispositifs de réseau d'accès.

4. Procédé d'économie d'énergie de réseau hétérogène selon l'une quelconque des revendications 1 à 3, dans lequel la migration, au moyen du dispositif de commande de réseau, d'un service dans la cellule qui doit être fermée, vers le ou les seconds dispositifs de réseau et la fermeture de la cellule qui doit être fermée, consistent :
à envoyer, au moyen du dispositif de commande de réseau, une première commande de transfert intercellulaire au premier dispositif de réseau d'accès, dans lequel la première commande de transfert intercellulaire comporte un identifiant qui est utilisé pour indiquer la cellule qui doit être fermée, de telle sorte que le premier dispositif de réseau d'accès transfère et connecte un équipement utilisateur (UE) desservi par la cellule qui doit être fermée, au ou aux seconds dispositifs de réseau d'accès ; et à fermer la cellule qui doit être fermée.

5. Procédé d'économie d'énergie de réseau hétérogène selon l'une quelconque des revendications 1 à 3, dans lequel après la migration, au moyen du dispositif de commande de réseau, d'un service dans la cellule qui doit être fermée, vers le ou les seconds dispositifs de réseau et la fermeture de la cellule qui doit être fermée, le procédé consiste en outre :
à recevoir, au moyen du dispositif de commande de réseau, un message de notification d'hibernation de cellule envoyé par le premier dispositif de réseau d'accès et à envoyer le message de notification d'hibernation de cellule au ou aux seconds dispositifs de réseau d'accès, dans lequel le message de notification d'hibernation de cellule comporte un identifiant qui est utilisé pour indiquer une cellule fermée (étape 30).

6. Procédé d'économie d'énergie de réseau hétérogène selon l'une quelconque des revendications 1 à 3, dans lequel le dispositif de commande de réseau est le premier dispositif de réseau d'accès et
l'acquisition, au moyen d'un dispositif de commande de réseau, d'informations de charge de toutes les cellules d'un premier dispositif de réseau d'accès consiste :
à acquérir, au moyen du premier dispositif de réseau d'accès, par une mesure, les informations de charge de toutes les cellules.

7. Procédé d'économie d'énergie de réseau hétérogène selon la revendication 6, dans lequel la migration, au moyen du dispositif de commande de réseau, d'un service dans la cellule qui doit être fermée, vers le ou les seconds dispositifs de réseau et la fermeture de la cellule qui doit être fermée, consistent :
à transférer et à connecter, au moyen du premier dispositif de réseau d'accès, un équipement utilisateur desservi par la cellule qui doit être fermée, au ou aux seconds dispositifs de réseau d'accès et à fermer la cellule qui doit être fermée.

8. Dispositif de commande de réseau, comprenant :
une unité d'acquisition (11), configurée pour acquérir des informations de charge de toutes les cellules d'un premier dispositif de réseau d'accès ; et
une unité de traitement (12), configurée : pour déterminer une cellule qui doit être fermée en fonction des informations de charge de toutes les cellules qui sont acquises par l'unité d'acquisition (11), pour déterminer au moins un second dispositif de réseau d'accès en fonction de la cellule qui doit être fermée, pour faire migrer un service dans la cellule qui doit être fermée, vers le ou les seconds dispositifs de réseau d'accès et pour fermer la cellule qui doit être fermée, dans lequel la cellule qui doit être fermée, se trouve dans une zone de couverture de réseau formée par le ou les seconds dispositifs de réseau d'accès,
**caractérisé en ce que** l'unité d'acquisition (11) est configurée pour envoyer une seconde demande d'acquisition d'informations de charge au premier dispositif de réseau d'accès et pour recevoir les informations de charge de toutes les cellules qui sont renvoyées par le premier dispositif de réseau d'accès,
qu'après la fermeture, au moyen du dispositif de commande de réseau, le dispositif de commande de réseau est configuré :
pour recevoir une première demande de réveil qui est envoyée par un second dispositif de réseau d'accès du ou des seconds dispositifs de réseau d'accès ; et
pour sélectionner une cellule qui doit être réveillée, parmi les cellules fermées du premier dispositif de réseau d'accès en déterminant une cellule fermée qui présente une même zone de couverture que celle de la cellule du second dispositif de réseau d'accès et qui est du premier dispositif de réseau d'accès, en tant que cellule qui doit être réveillée et pour envoyer une seconde demande de réveil au premier dispositif de réseau d'accès, dans lequel la seconde demande de réveil comporte un identifiant qui est utilisé pour indiquer la cellule qui doit être réveillée, de telle sorte que le premier dispositif de réseau d'accès active un module radiofréquence correspondant à la cellule qui doit être réveillée.

9. Dispositif de commande de réseau selon la revendication 8, dans lequel l'unité de traitement (12) est en outre configurée pour déterminer une cellule dont des informations de charge ne dépassent pas un premier seuil prédéterminé, en tant que cellule qui doit être fermée.

10. Dispositif de commande de réseau selon la revendication 8 ou 9, dans lequel l'unité de traitement (12) est en outre configurée : pour déterminer le ou les seconds dispositifs de réseau d'accès en fonction de la cellule qui doit être fermée ; pour envoyer séparément une première demande d'acquisition d'informations de charge au ou aux seconds dispositifs de réseau d'accès et pour recevoir des informations de charge renvoyées séparément par le ou les seconds dispositifs de réseau d'accès ; et pour déterminer, en fonction des informations de charge de la cellule qui doit être fermée, et des informations de charge du ou des seconds dispositifs de réseau d'accès, si le ou les seconds dispositifs de réseau d'accès peuvent supporter une charge de la cellule qui doit être fermée et, si le ou les seconds dispositifs de réseau d'accès peuvent supporter la charge de la cellule qui doit être fermée, pour faire migrer le service dans la cellule qui doit être fermée, vers le ou les seconds dispositifs de réseau d'accès.

11. Dispositif de commande de réseau selon l'une quelconque des revendications 8 à 10, dans lequel l'unité d'acquisition (11) est en outre configurée : pour envoyer une seconde demande d'acquisition d'informations de charge au premier dispositif de réseau d'accès et pour recevoir des informations de charge de toutes les cellules qui sont renvoyées par le premier dispositif de réseau d'accès.

12. Dispositif de commande de réseau selon la revendication 11, dans lequel l'unité de traitement (12) est en outre configurée : pour envoyer une première commande de transfert intercellulaire au premier dispositif de réseau d'accès, dans lequel la première commande de transfert intercellulaire comporte un identifiant qui est utilisé pour indiquer la cellule qui doit être fermée, de telle sorte que le premier dispositif de réseau d'accès transfère et connecte un équipement utilisateur (UE) desservi par la cellule qui doit être fermée, au ou aux seconds dispositifs de réseau d'accès ; et pour fermer la cellule qui doit être fermée.

13. Dispositif de commande de réseau selon la revendication 11, dans lequel l'unité de traitement (12) est en outre configurée : pour recevoir un message de notification d'hibernation de cellule envoyé par le premier dispositif de réseau d'accès et pour envoyer le message de notification d'hibernation de cellule au ou aux seconds dispositifs de réseau d'accès, dans lequel le message de notification d'hibernation de cellule comporte un identifiant qui est utilisé pour indiquer une cellule fermée.
